# EUROPÄISCHE PATENTSCHRIFT

(11) **EP 2 263 279 B1**
(45) Veröffentlichungstag und Bekanntmachung des Hinweises auf die Patenterteilung: **16.11.2011**
(21) Anmeldenummer: 09729782.4
(22) Anmeldetag: 07.04.2009
(51) Int. Cl.: H01M 8/02, H01M 8/10

(54) **GASVERTEILERFELDPLATTE MIT VERBESSERTER GASVERTEILUNG FÜR EINE BRENNSTOFFZELLE UND EINE SOLCHE ENTHALTENDE BRENNSTOFFZELLE**
GAS DISTRIBUTOR FIELD PLATE HAVING IMPROVED GAS DISTRIBUTION FOR A FUEL CELL AND A FUEL CELL COMPRISING THE SAME
PLAQUE DE DISTRIBUTEUR DE GAZ À DISTRIBUTION AMÉLIORÉE DU GAZ POUR UNE PILE À COMBUSTIBLE, ET PILE À COMBUSTIBLE COMPRENANT UNE TELLE PLAQUE

(30) Priorität: 07.04.2008 DE 102008017600
(43) Veröffentlichungstag der Anmeldung: 22.12.2010
(73) Patentinhaber: Zentrum für Sonnenenergie- und Wasserstoff-Forschung Baden-Württemberg Gemeinnützige Stiftung, 70565 Stuttgart (DE)
(72) Erfinder: SCHOLTA, Joachim, 89278 Nersingen (DE); HÄUSSLER, Frank, 89081 Ulm (DE); MESSERSCHMIDT, Matthias, 74586 Frankenhardt (DE); LEHNERT, Werner, 73340 Amstetten-Bräunisheim (DE); JÖRISSEN, Ludwig, 89231 Neu-Ulm (DE)
(74) Vertreter: Merkle, Gebhard
(86) Internationale Anmeldenummer: PCT/EP2009/002572
(87) Internationale Veröffentlichungsnummer: WO 2009/124727

(56) Entgegenhaltungen:
- WO-A-2004/068622
- WO-A-2005/024985
- WO-A-2007/148761
- US-A1- 2007 298 311
- US-B1- 6 528 196

## Beschreibung

### Gebiet der Erfindung

Die Erfindung betrifft eine Gasverteflerfeldplatte für eine Brennstoffzelle, wobei in der Gasverteilerfeldplatte parallel verlaufende, durch Stege begrenzte Gasführungskanäle für die Reaktionsgase mit einer mäanderförmigen Struktur angeordnet sind. Ferner betrifft die Erfindung eine Brennstoffzelle mit einer solchen Gasverteilerfeldplatte auf der Kathodenseite und/oder Anodenseite. Bei einer solchen Brennstoffzelle handelt es sich insbesondere um eine Polymer-Elektrolyt-Membran (PEM)-Brennstoffzelle.

### Hintergrund der Erfindung

PEM-Brennstoffzellen verstromen anodenseitig Wasserstoff oder Reformat aus unterschiedlichen Quellen und Verfahren mit einem Inertgasanteil von etwa 20 bis 70%. Kathodenseitig wird fast durchgängig Luft als Sauerstoffquelle verwendet.

In beiden Fällen kommt es darauf an, die Reaktionsgase möglichst weitgehend unter Erhalt der Zellspannung umzusetzen. Dies erfordert eine gleichmäßige Führung der Reaktionsgase über die Zelle in einer Weise, dass Verarmungszonen, welche lokal zu einer stark verminderten Stromdichte führen, weitestmöglich vermieden werden. Die Gasführung soll weiterhin in mindestens einer Richtung mit einer ausreichend hohen Geschwindigkeit zur Austragung von als Tröpfchen anfallendem Kondensat erfolgen können.

### Stand der Technik

Bekannt ist, dass die Gasführung zur Erreichung einer ausreichend hohen Geschwindigkeit über einzelne Kanäle oder mehrere parallel angeordnete Kanäle mit einer mäanderförmigen Struktur erfolgen kann. Diese kann sich gleichförmig über den aktiven Bereich erstrecken oder auch lokale Verzweigungen mit komplexerer Struktur beinhalten.

Bekannt ist ebenfalls, dass bei geeigneter Kanalanordnung, wie etwa ähnliche Kanallängen und ähnliche Kurvenzahl der Einzelkanäle, eine gleichförmige Geschwindigkeitsverteilung in den Kanälen erzielt werden kann.

Bei der z.B. in DE 100 15 360 A1 beschriebenen Kanalordnung mit Mäanderstruktur nach dem Stand der Technik verlaufen einige Kanäle nebeneinander, deren statischer Druck erheblich voneinander abweicht, da zwischen den aneinanderliegenden Gaskanälen größere Weglängen mit entsprechenden Druckabfällen liegen können. Daraus resultiert eine Querdiffusion über die Gasdiffusionslage, welche zu einer lokalen Anreicherung von Reaktanden und einem teliweisen hydraulischen Kurzschluss bestimmter Kanalteile führt, welcher seinerseits zu einer Verarmung der Reaktanden in anderen Bereichen der aktiven Fläche und einer daraus resultierenden Verminderung der erzielbaren Stromdichte führt.

In Folge muss der entsprechende Brennstoffzellenstapel mit einem niedrigeren Umsatzgrad betrieben werden, was wiederum zu einem schlechteren Anlagenwirkungsgrad führt.

Die DE 103 39 974 beschreibt eine Kanalanordnung, nach der an den Mäandergrenzkanälen Stege mit ansteigender Breite oder mit gleichmäßig erhöhter Breite eingesetzt werden, um den Quertransport über die Mäandergrenzkanäle auf ein günstiges Maß zu reduzieren.

Eine solche Anordnung weist im Falle einer ansteigenden Mäanderbreite jedoch den Nachteil einer Verschiebung der anoden- und kathodenseitlgen Stegverläufe gegeneinander auf, welche zu einer Verminderung des Steg-Überdeckungsgrades der anoden- und kathodenseitig angeordneten Stege führt. Durch diese Verminderung des Überdeckungsgrades wird lokal eine Verminderung der Anpreßkraft innerhalb des Brennstoffzellstapels bewirkt, was zu einer Verschlechterung der Elektrodenkontaktierung und damit zu einer Verringerung der Zellspannung führt.

Eine in der DE 103 39 974 ebenfalls beschriebene Anordnung mit gleichmäßig erhöhter Breite der Mäandergrenzstege vermeidet zwar diesen Nachteil, führt jedoch andererseits zu Verarmungszonen im Bereich der Umlenkzonen der Mäandergrenzkanäle, da der verbreiterte Steg bei passender Dimensionierung auf der gegenüberliegenden Seite für die Umlenkzone zu breit dimensioniert ist, was zu einer Reaktandenverarmung unter den Stegbereichen im Bereich der Umlenkzonen der Mäandergrenzkanäle führt.

### Aufgabe der Erfindung

Der Erfindung liegt die Aufgabe zugrunde, eine Gasverteilerfeldplatte für eine Brennstoffzelle vorzusehen, bei der die Gasführungskanäle eine mäanderförmige Struktur aufweisen, wobei einerseits die an den Mäandergrenzkanälen auftretende Querdiffusion über die Gasdiffusionslage soweit vermindert ist, dass eine annährend gleichmäßige Gasverteilung über die gesamte Mäanderlänge erreicht wird, und andererseits das Auftreten von Reaktanden-Verarmungszonen in den Umlenkungsbereichen der Mäandergrenzkanäle vermieden oder zumindest vermindert wird. Ferner soll eine mit einer solchen Gasverteilerfeldplatte ausgerüstete Brennstoffzelle mit einem hohen Steg-Überdeckungsgrad der anoden- und kathodenseitig angeordneten Stege innerhalb der Gasverteilerfeldplatten und mit möglichst hohen Reaktionsgas-Umsatzgraden vorgesehen werden, welche einen hohen Anlagenwirkungsgrad ermöglicht.

### Zusammenfassung der Erfindung

Die vorstehende Aufgabe wird erfindungsgemäß gelöst durch eine Gasverteilerfeldplatte gemäß Anspruch 1 sowie durch eine Brennstoffzelle gemäß Anspruch 8.

Bevorzugte beziehungsweise besonders zweckmäßige Ausführungsformen des Anmeldungsgegenstandes sind in den Unteransprüchen angegeben.

Bei der erfindungsgemäßen Gasverteilerfeldplatte wird der Quertransport von Medien entlang der Mäandergrenzkanäle vermindert und dadurch eine gleichmäßige Strömung durch alle Kanäle erreicht, indem an den Mäandergrenzkanälen, welche an Stegen mit entgegengesetzter Strömungsrichtung der Reaktionsgase vorhanden sind, Mäandergrenzstege mit im Vergleich zu den übrigen Stegen erhöhter Breite vorgesehen sind. Ferner wird durch eine geeignete Modifizierung der Mäandergrenzstege in den Umlenkungsbereichen der Mäandergrenzkanäle das Auftreten von Verarmungszonen in den Umlenkungsbereichen vermieden oder zumindest stark vermindert. Die erfindungsgemäßen Gasverteilerfeldplatten erlauben weiterhin einen hohen Steg-Überdeckungsgrad der anoden- und kathodenseitig angeordneten Stege innerhalb der Gasverteilerfeldplatten, so dass der Aufbau von Brennstoffzellen mit hohen gas- und luftseitigen Umsatzgraden und somit einem hohen Wirkungsgrad ermöglicht wird.

### Detaillierte Beschreibung der Erfindung

Gegenstand der Erfindung ist somit eine Gasverteilerfeldplatte für eine Brennstoffzelle, wobei in der Gasverteilerfeldplatte parallel verlaufende, durch Stege begrenzte Gasführungskanäle für die Reaktionsgase mit einer mäanderförmigen Struktur angeordnet sind, die dadurch gekennzeichnet ist, dass an den Mäandergrenzkanälen, welche an Stegen mit entgegengesetzter Strömungsrichtung der Reaktionsgase vorhanden sind, Mäandergrenzstege mit im Vergleich zu den übrigen Stegen erhöhter Breite vorgesehen sind, wobei die verbreiterten Mäandergrenzstege in den Umlenkungsbereichen der Mäandergrenzkanäle so modifiziert sind, dass eine Reaktandenverarmung in den Umlenkungsbereichen der Mäandergrenzkanäle und ein Quertransport von Medien entlang der Mäandergrenzkanäle vermindert werden.

Die verbreiterten Mäandergrenzstege in den Umlenkungsbereichen der Mäandergrenzkanäle sind dadurch modifiziert, dass sie Ausnehmungen und/oder Ausbuchtungen aufweisen, oder dass zusätzliche Kanäle vorgesehen sind. Diese Modifizierungen erlauben einen verbesserten Medienzutritt an den sonst verarmungsgefährdeten Bereichen.

Gegenstand der Erfindung ist weiterhin eine Brennstoffzelle mit einer solchen Gasverteilerfeldplatte auf der Kathodenseite und/oder Anodenseite, vorzugsweise auf der Kathodenseite und der Anodenseite mit einer Steggeometrie, die einen hohen Steg-Überdeckungsgrad der anoden- und kathodenseitig angeordneten Stege aufweist.

Gemäß einer Ausführungsform sind in der Gasverteilerfeldplatte Mäandergrenzstege mit Im Vergleich zu den übrigen Stegen gleichmäßig erhöhter Breite vorgesehen. Durch solche Grenzstege mit konstant erhöhter Breite ist die auftretende Querströmung an der dem Umlenkungsbereich entgegengesetzten Seite gerade ausreichend, um an der Reaktionszone oberhalb des betreffenden Stegabschnitts eine ausreichende Reaktandenkonzentration zu ermöglichen.

Die Ausnehmungen und/oder Ausbuchtungen der verbreiterten Mäandergrenzstege in den Umlenkungsbereichen unterliegen keinem besonderen Beschränkungen, solange der Zweck erfüllt wird, einen verbesserten Medienzutritt, etwa durch Verlangsamung der Strömungsgeschwindigkeit der Reaktionsgase in den Umlenkungsbereichen zu ermöglichen. Die Ausnehmungen und/oder Ausbuchtungen können daher jede geeignete geometrische Form aufweisen, beispielsweise können die Ausnehmungen oder Ausbuchtungen kreissegmentförmig, zacken- oder sägezahnförmig oder rechtwinklig sein. Zusätzliche Kanäle können dadurch vorgesehen werden, dass in den Mäandergrenzstegen in den Umlenkungsbereichen Ausnehmungen in der Weise vorgesehen werden, dass die Mäandergrenzstege in diesen Bereichen unterteilt werden, so dass zusätzliche Strömungskanäle entstehen, die mit den Mäandergrenzkanälen in Strömungsverbindung stehen. Die Ausnehmungen und/ oder Ausbuchtungen und die zusätzlichen Kanäle können auf einer Seite oder auf beiden Seiten der Mäandergrenzstege vorgesehen sein. Wenn diese Modifizierungen auf beiden Seiten der jeweiligen Mäandergrenzstege vorgesehen sind, können sie symmetrisch oder asymmetrisch angeordnet sein.

Gemäß einer anderen Ausführungsform sind in der erfindungsgemäßen Gasverteilerfeldplatte Mäandergrenzstege mit im Vergleich zu den übrigen Stegen ansteigender Breite vorgesehen, vorzugsweise mit einer keilförmig ansteigenden Breite, wobei im Gegensatz zu DE 103 39 974 die übrige Kanal-Steg-Anordnung eine rechtwinklige Geometrie aufweist. Bei dieser Ausführungsform sind in den Umlenkungsbereichen der Mäandergrenzkanäle zusätzliche Stegelemente vorgesehen, welche den verringerten Strömungswiderstand des teilweise verbreiterten Gasführungskanals kompensieren, so dass der Strömungswiderstand aller Kanäle vergleichbar bleibt und damit insgesamt eine gleichmäßige Strömungsverteilung über alle Bereiche der Zelle bei gleichzeitig hohem Steg-Überdeckungsgrad der anoden- und kathodenseitig angeordneten Stege erreicht wird. Die Form der zusätzlichen Stegelemente unterliegt keiner besonderen Beschränkung, so lange der Zweck erreicht wird, den verringerten Strömungswiderstand in den verbreiterten Kanälen zu kompensieren. Beispielsweise können auf beiden Seiten der keilförmig ansteigenden Mäandergrenzstege parallel verlaufende längliche Stegelemente, welche durchgehend oder unterbrochen sein können, angeordnet sein.

Erfindungsgemäß sind somit die folgenden Konfigurationen vorgesehen :
a) Eine Einfügung zusätzlicher Kanäle im gleichmäßig verbreiterten Grenzsteg in der Nähe des Umlenkungsbereichs des Medienstroms
b) Eine Einfügung zusätzlicher Ausnehmungen und/oder Ausbuchtungen an den Stegrändern des gleichmäßig verbreiterten Grenzstegs in der Nähe des Umlenkungsbereichs des Medienstroms
c) Die Verwendung eines Grenzstegs mit ansteigender Breite gemäß DE 103 39 974, wobei im Unterschied zu DE 103 39 974 die übrigen Kanäle und Stege eine gleichförmige Breite in der Form aufweisen, dass eine rechtwinklige Geometrie mit hohem Überdeckungsgrad der anoden- und kathodenseitigen Stege erfolgt. In dieser Ausführungsform erfolgt eine Anpassung des Strömungswiderstandes des verbreiterten Grenzkanals durch Einfügen zusätzlicher Stegelemente beliebiger Form.
d) Eine beliebige Kombination der Konfigurationen a) bis c).

Jede der oben beschriebenen Ausführungsformen bewirkt gegenüber dem durch DE 103 39 974 gegebenen Stand der Technik eine vergleichbare Anpassung der Querströmung über die Mäandergrenzkanäle, jedoch bei einem zusätzlich erhöhten Überdeckungsgrad zwischen den anoden- und kathodenseitigen Stegen, welcher seinerseits zu einer verbesserten elektrischen Kontaktierung und damit besonders bei höheren Stromdichten zu einer zusätzlich erhöhten Zellspannung führt.

Zusätzlich besteht die Möglichkeit, die oben beschriebenen Konfigurationen a) bis d) in angepaßter Form für die Anoden- und die Kathodenseite auszuführen, um so einem unterschiedlichen Querströmungsverhalten auf beiden Medienseiten Rechnung zu tragen.

Die konkret gewählte Stegbreite wie auch die Art und Kombination der oben beschriebenen Konfigurationen a) bis d) ist abhängig von den Eigenschaften der gewählten Gasdiffusionslage wie auch den gewählten Kanalgeometrien. Erfindungsgemäß wirksame Geometrien können sowohl über Modellrechnungen als auch über die Ermittlung von Leistungskennlinien aufgebauter Brennstoffzellen unter Variation der Steggeometrien ermittelt werden.

Gemäß einem Ausführungsbeispiel umfasst die erfindungsgemäße Kanal-Steg-Anordnung einen Dreier-Mäander. Die Erfindung ist jedoch nicht auf diese Anordnung beschränkt, sondern umfasst eine beliebige Anzahl nebeneinander laufender Kanäle. Bei den erfindungsgemäß gewählten Kombinationen von Grenzstegbreiten sowie geeigneten Kombinationen der Konfigurationen a) bis d) ist gewährleistet, dass der Strömungswiderstand innerhalb des am Mäandergrenzsteg entlang laufenden Kanals vergleichbar dem Strömungswiderstand in den übrigen Kanälen ist.

Weiterhin kann die erfindungsgemäße Gasverteilerfeldplatte zusätzliche Merkmale aufweisen, welche den Austrag von Kondensat erleichtern, beispielsweise eine Hydrophobierung oder eine Hydrophilierung der Kanaloberflächen.

Ferner kann die mäanderförmige Struktur der Gasführungskanäle in den erfindungsgemäßen Gasverteilerfeldplatten so angeordnet sein, dass eine Strömung der Reaktionsgase in gleicher, gekreuzter oder entgegengesetzter Strömungsrichtung ermöglicht wird.

Der Aufbau und die Komponenten einer erfindungsgemäßen Brennstoffzelle entsprechen dem Stand der Technik, mit Ausnahme der erfindungsgemäßen Gasverteilerfeldplatte auf der Kathodenseite und/oder Anodenseite, vorzugsweise sowohl auf der Kathoden- als auch der Anodenseite. Bei den verwendeten Gasdiffusionslagen (GDL)-Materialien handelt es sich um die üblicherweise in Polymermembran-, Direktmethanol-, Hochtemperatur-PEM und Phosphorsäure-Brennstoffzellen verwendeten Gasdiffusionslagen. Diese dienen dem Medientransport von und zu den Elektroden sowie der möglichst flächigen Elektrodenkontaktierung. Die Gasdiffusionslagen beeinflussen ebenfalls den Wasserhaushalt der Zelle und damit insbesondere das Verhalten bei sehr trockenen oder sehr feuchten, d.h. kondensierenden Betriebsbedingungen.

Insbesondere bevorzugt handelt es sich bei der erfindungsgemäßen Brennstoffzelle um eine Polymer-Elektrolyt-Membran (PEM)-Brennstoffzelle.

### Bevorzugte Ausführungsformen der Erfindung

Die Erfindung wird anhand bevorzugter Ausführungsformen mit Bezugnahme auf die Zeichnungen näher erläutert. Dabei zeigen:
**Figur 1****:** Einen Ausschnitt einer erfindungsgemäß ausgeführten Gasverteilerfeldplatte mit gleichmäßig verbreiterten Mäandergrenzstegen;
**Figur 2****:** Einen Ausschnitt einer erfindungsgemäß ausgeführten Gasverteilerfeldplatte mit Mäandergrenzstegen mit keilförmig ansteigender Breite; und
**Figur 3****:** Ein Diagramm, welches den Einfluss des Stegüberdeckungsgrades auf den Flächenwiderstand der Zelle bei verschiedenen Anpressdrucken zeigt.

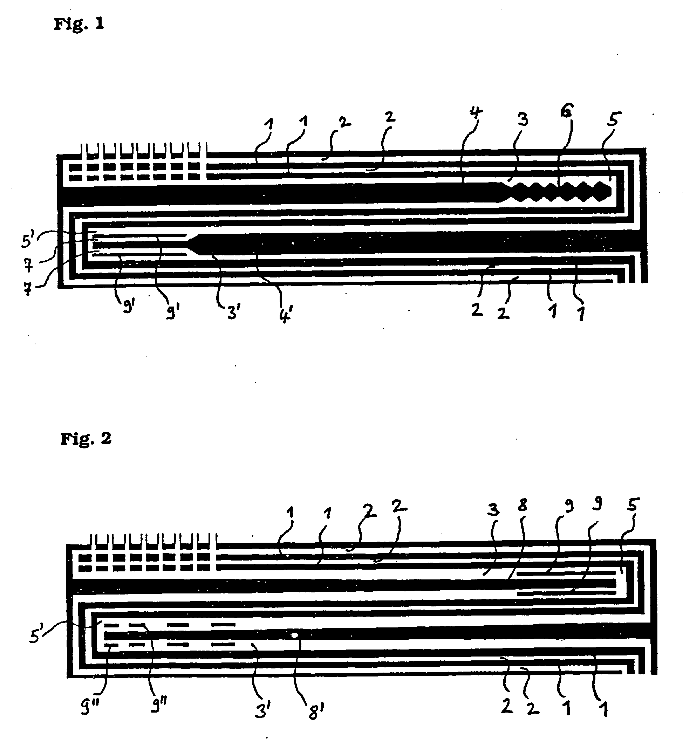

Das Ausführungsbeispiel gemäß Figur 1 zeigt einen Ausschnitt einer erfindungsgemäßen Gasverteilerfeldplatte mit parallel verlaufenden, durch Stege 1 begrenzten Gasführungskanälen 2 für die Reaktionsgase, welche mäanderförmig angeordnet sind. Bei diesem Beispiel sind an den Mäandergrenzkanälen 3 und 3', welche an Stegen mit entgegengesetzter Strömungsrichtung der Reaktionsgase vorhanden sind, Mäandergrenzstege 4 und 4' mit in Vergleich zu den übrigen Stegen gleichmäßig erhöhter Breite vorgesehen. Die verbreiterten Mäandergrenzstege 4 und 4' sind in den Umlenkungsbereichen 5 und 5' gemäß den oben beschriebenen Konfigurationen a) und b) modifiziert. So weist der obere Mäandergrenzsteg 4 im Umlenkungsbereich 5 an beiden Rändern symmetrisch angeordnete, zackenförmige Ausnehmungen 6 auf, während im unteren Mäandergrenzsteg 4' im Umlenkungsbereich 5' zusätzliche Kanäle 7 vorgesehen sind, welche mit dem Mäandergrenzkanal 3' in Strömungsverbindung stehen. Diese zusätzlichen Kanäle 7 werden durch die verbleibenden Stegelemente 9' begrenzt.

Das Ausführungsbeispiel gemäß Figur 2 zeigt ebenfalls einen Ausschnitt einer erfindungsgemäßen Gasverteilerfeldplatte mit parallel verlaufenden, durch Stege 1 begrenzten Gasführungskanälen 2 für die Reaktionsgase, welche mäanderförmig angeordnet sind. Bei diesem Beispiel sind an den Mäandergrenzkanälen 3 und 3', welche an Stegen mit entgegengesetzter Strömungsrichtung der Reaktionsgase vorhanden sind, Mäandergrenzstege 8 und 8' mit im Vergleich zu den übrigen Stegen keilförmig ansteigender Breite vorgesehen. Die keilförmig verbreiterten Mäandergrenzstege 8 und 8' sind in den Umlenkungsbereichen 5 und 5' gemäß der oben beschriebenen Konfiguration c) modifiziert, in dem in den Umlenkungsbereichen 5 und 5' zusätzliche Stegelemente 9 und 9" vorgesehen sind. Beim oberen Grenzsteg 8 sind diese Stegelemente 9 durchgehend und parallel zueinander auf beiden Seiten des Grenzstegs 8 angeordnet. Im unteren Grenzsteg 8' sind die zusätzlichen Stegelemente 9" unterbrochen.

Die Erfindung wird anhand einer Polymermembran-Brennstoffzelle erläutert, ohne auf diesen Zelltyp beschränkt zu sein.

Ein Ausführungsbeispiel einer erfindungsgemäß aufgebauten Gasverteilerfeldplatte wird anhand einer Polymermembran-Brennstoffzelle mit 100 cm² Aktivfläche erläutert:
Die nach dem Stand der Technik aufgebaute Zelle weist ein Gasverteilerfeld (Flow-Field) mit einem dreifach parallelisierten Mäander mit einer Kanal- und Stegbreite von etwa 0,8 mm bis 1 mm auf.

Die Kanaltiefe liegt im Bereich von 0,4 bis 1,6 mm. Nach dem Stand der Technik sind die Ein- und Ausströmungsbereiche so aufgebaut, dass durch in diesem Bereich mehrfach unterbrochene Stege eine gleichmäßige Anströmung aller Kanäle eines parallelisierten Mäanders ermöglicht wird. Die Anordnung der Mäander auf der Anoden- und Kathodenseite können eine Strömung in gleicher, gekreuzter oder entgegengesetzter Strömungsrichtung ermöglichen. Im Ausführungsbeispiel sind die Mäander so angeordnet, dass sowohl eine Gleich- als auch eine Gegenströmung der Medien erfolgen kann.

Die Zelle mit erfindungsgemäß aufgebautem Flow-Field ist in oben beschriebener Form aufgebaut, weist jedoch an den Stegen mit entgegengesetzter Strömungsrichtung, d.h. den Mäandergrenzstegen, eine erhöhte Breite von z.B. 2,5 mm zur Verminderung der Querströmung sowie am strömungsumlenkseitigen Ende des Steges einen Aufbau entsprechend den oben beschriebenen Konfigurationen a) bis d) auf, so dass die in diesem Bereich mögliche Reaktanden-Verarmung über den Stegen durch eine oder mehrere dieser Zusatzstrukturen kompensiert wird.

Diese Anordnung ermöglicht gegenüber dem Stand der Technik insbesondere bei höheren Stromdichten und erhöhten Gas- und Luftumsätzen eine verbesserte Zellspannung.

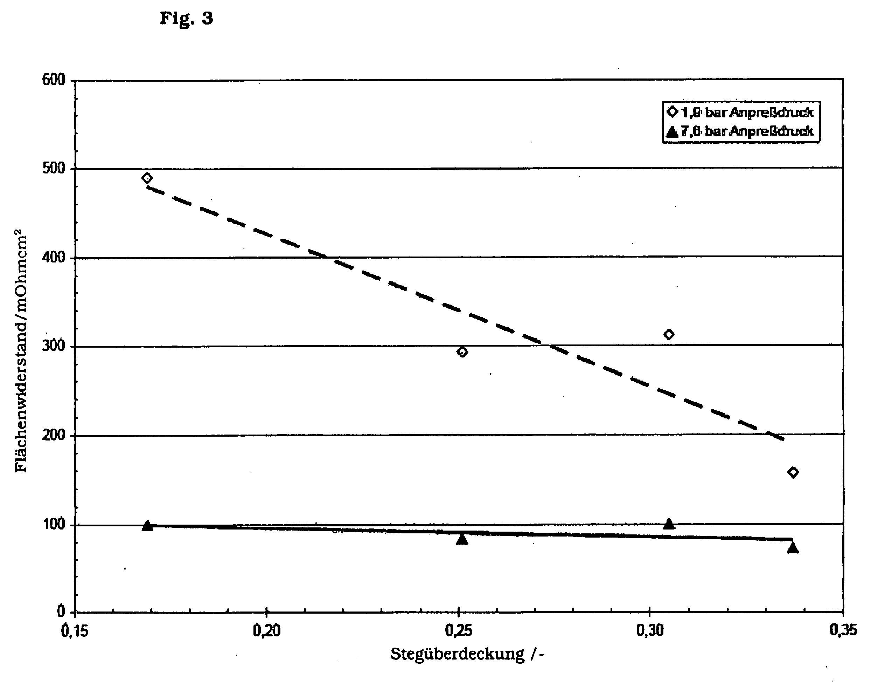

Der Einfluß des Stegüberdeckungsgrades zeigt sich in erster Linie beim Flächen- und damit auch beim Gesamtwiderstand der Zelle, welcher einen wesentlichen Einfluß auf die Höhe der Zellspannung unter Stromfluß ausübt. Verschiedene Flowfieldgeometrien mit unterschiedlichem Stegüberdeckungsgrad und einer Aktivfläche von 100 cm² wurden in Abhängigkeit vom Anpreßdruck hinsichtlich ihres Zellwiderstands untersucht. Die Ergebnisse zeigen eine deutliche, bei niedrigen Anpreßdrucken sehr starke Abhängigkeit von Stegüberdeckungsgrad und Zellwiderstand. Die Stegüberdeckungsgrade für die untersuchten Flowfieldanordnungen sind in Tabelle 1, die entsprechenden Ergebnisse sind in Fig. 3 wiedergegeben.

**Tabelle 1: Stegüberdeekungsgrade der untersuchten Flowfieldgeometrien**

| **Aufbau** | **Stegüberdeckung Anode / Kathode** |
|---|---|
| Aufbau 01 | 33,7% |
| Aufbau 02 | 16,9% |
| Aufbau 03 | 30,5% |
| Aufbau 04 | 25,1% |

Anhand der entsprechenden Strom-Spannungskennlinien zeigt sich, dass erfindungsgemäß eine signifikante Verbesserung des Kennlinienverlaufs bei hohen Stromdichten erzielt werden kann. Die erwartete Verbesserung der Stromdichte bei vergleichbarer Zellspannung liegt im Bereich von 1 bis 5 % durch die erfindungsgemäße Beseitigung unterversorgter Bereiche im Bereich der verbreiterten Stege. Weiterhin sind Verbesserungen hinsichtlich der Widerstandsverminderung durch eine höhere Stegüberdeckung zu erwarten. Diese sollten Je nach Anpreßkraft im Bereich von 0,01 bis zu mehr als 0,1 Ohmcm² liegen und damit bei einer Stromdichte von 1 A/cm² zu einer Verbesserung der Zellspannung von mindestens 10 mV führen. Entsprechend wird bei vergleichbaren Stromdichten für eine erfindungsgemäß aufgebaute Zelle ein verbesserter Verlauf der Umsatzkennlinie durch ein gleichmäßig erhöhtes Spannungsniveau mit einer Anhebung von ebenfalls mindestens 10 mV erwartet.

Diese Verbesserungen sind mit einer durch die erfindungsgemäß verbreiterten Stege mit Modifizierung zur Vermeidung von Reaktandenverarmungen im Umlenkbereich und dadurch im gesamten Mäandergrenzstegbereich angepaßten Querdiffusion bei gleichzeitiger Vermeidung unterversorgter Bereiche im Umlenkbereich der verbreiterten Stege und der dadurch bewirkten gleichmäßigeren Strömungsverteilung erklärbar. Weiterhin trägt der durch diese Anordnung erzielbare höhere Steg-Überdeckungsgrad auf der Kathoden- und Anodenseite zu einer Verminderung des Zellwiderstands und damit zu dem erhöhten Spannungsverlauf bei.

## Patentansprüche

1. Gasverteilerfeldplatte für eine Brennstoffzelle, wobei in der Gasverteilerfeldplatte parallel verlaufende, durch Stege (1) begrenzte Gasführungskanäle (2) für die Reaktionsgase mit einer mäanderförmigen Struktur angeordnet sind, **dadurch gekennzeichnet, dass** an den Mäandergrenzkanälen (3, 3'), welche an Stegen mit entgegengesetzter Strömungsrichtung der Reaktionsgase vorhanden sind, Mäandergrenzstege (4, 4', 8, 8') mit im Vergleich zu den übrigen Stegen erhöhter Breite vorgesehen sind, wobei die verbreiterten Mäandergrenzstege (4, 4', 8, 8') in den Umlenkungsbereichen (5, 5') der Mäandergrenzkanäle (3, 3') so modifiziert sind, dass eine Reaktandenverarmung in den Umlenkungsbereichen (5, 5') der Mäandergrenzkanäle (3, 3') und ein Quertransport von Medien entlang der Mäandergrenzkanäle (3, 3') vermindert werden, wobei die verbreiterten Mäandergrenzstege (4,4',8,8') dadurch modifiziert sind, dass sie entweder Ausnehmungen (6) und/oder Ausbuchtungen aufweisen oder dass in den Umlenkungsbereichen (5,5') zusätzliche Kanäle (7) vorgesehen sind.

2. Gasverteilerfeldplatte nach Anspruch 1, **dadurch gekennzeichnet, dass** Mäandergrenzstege (4, 4') mit im Vergleich zu den übrigen Stegen gleichmäßig erhöhter Breite vorgesehen sind.

3. Gasverteilerfeldplatte nach Anspruch 1, **dadurch gekennzeichnet, dass** Mäandergrenzstege (8, 8') mit im Vergleich zu den übrigen Stegen ansteigender Breite vorgesehen sind.

4. Gasvertellerfeldplatte nach Anspruch 3, **dadurch gekennzeichnet, dass** Mäandergrenzstege (8, 8') mit keilförmig ansteigender Breite vorgesehen sind.

5. Gasverteilerfeldplatte nach Anspruch 3 oder 4, **dadurch gekennzeichnet, dass** in den Umlenkungsbereichen (5, 5') der Mäandergrenzkanäle (3, 3') zusätzliche Stegelemente (9, 9', 9") vorgesehen sind und die übrige Kanal-Steg-Anordnung eine rechtwinklige Geometrie aufweist.

6. Gasverteilerfeldplatte nach mindestens einem der vorangehenden Ansprüche, **dadurch gekennzeichnet, dass** Mäandergrenzstege (4, 4', 8, 8') verschiedener Modifikationen kombiniert sind.

7. Brennstoffzelle mit einer Gasverteilerfeldplatte gemäß mindestens einem der Ansprüche 1-6 auf der Kathodenseite und/oder Anodenseite.

8. Brennstoffzelle nach Anspruch 7, bei der es sich um eine Polymer-Elektrolyt-Membran (PEM)-Brennstoffzelle handelt.

## Claims

1. A gas distributor field plate for a fuel cell, wherein gas guide channels (2), which run parallel in the gas distributor field plate and are bounded by webs (1), for the reaction gases are arranged with a meandering structure, **characterized in that** meander boundary webs (4, 4', 8, 8'), whose width is greater than that of the other webs, are provided on the meander boundary channels (3, 3') which are provided on webs with an opposite flow direction of the reaction gases, wherein the widened meander boundary webs (4, 4', 8, 8') are modified in the deflection areas (5, 5') of the meander boundary channels (3, 3') such that reactant depletion in the deflection areas (5, 5') of the meander boundary channels (3, 3') and lateral transport of media along the meander boundary channels (3, 3') are reduced, wherein the widened meander boundary webs (4, 4', 8, 8') are modified such that they either have recesses (6) and/or outward bulges or that in the deflection areas (5, 5') additional channels (7) are provided.

2. The gas distributor field plate as claimed in claim 1, **characterized in that** meander boundary webs (4, 4') whose width is uniformly greater than that of the other webs are provided.

3. The gas distributor field plate as claimed in claim 1, **characterized in that** meander boundary webs (8, 8') whose width is increasingly greater than that of the other webs are provided.

4. The gas distributor field plate as claimed in claim 3, **characterized in that** meander boundary webs (8, 8') are provided with a width which increases in a wedge shape.

5. The gas distributor field plate as claimed in claim 3 or 4, **characterized in that** additional web elements (9, 9', 9") are provided in the deflection areas (5, 5') of the meander boundary channels (3, 3'), and the other channel/web arrangement has a rectangular geometry.

6. The gas distributor field plate as claimed in at least one of the preceding claims, **characterized in that** meander boundary webs (4, 4', 8, 8') of different modifications are combined.

7. A fuel cell having a gas distributor field plate as claimed in at least one of claims 1-6 on the cathode side and/or anode side.

8. The fuel cell as claimed in claim 7, which is a polymer electrolyte membrane (PEM) fuel cell.

## Revendications

1. Plaque de champ répartiteur de gaz pour une cellule de combustible, des canaux de guidage de gaz (2) s'étendant parallèlement, délimités par des nervures (1), destinés aux gaz de réaction et présentant une structure en forme de méandre étant disposés dans la plaque de champ répartiteur de gaz, **caractérisée en ce que** des nervures limites de méandre (4, 4', 8, 8') avec une largeur augmentée par rapport aux nervures restantes sont prévues sur les canaux limites de méandre (3, 3'), lesquels sont présents sur des nervures avec un sens d'écoulement opposé des gaz de réaction, les nervures limites de méandre (4, 4', 8, 8') élargies étant modifiées dans les zones de déviation (5, 5') des canaux limites de méandre (3, 3'), de telle sorte qu'un appauvrissement en réactif dans les zones de déviation (5, 5') des canaux limites de méandre (3, 3') et un transport transversal de fluides le long des canaux limites de méandre (3, 3') sont réduits, les nervures limites de méandre (4, 4', 8, 8') élargies étant modifiées par le fait qu'ils présentent des évidements (6) et/ou des évasements ou par le fait que des canaux (7) supplémentaires sont prévus dans les zones de déviation (5, 5').

2. Plaque de champ répartiteur de gaz selon la revendication 1, **caractérisée en ce que** des nervures limites de méandre (4, 4') avec une largeur augmentée de façon régulière par rapport aux autres nervures sont prévues.

3. Plaque de champ répartiteur de gaz selon la revendication 1, **caractérisée en ce que** des nervures limites de méandre (8, 8') avec une largeur croissante par rapport aux autres nervures sont prévues.

4. Plaque de champ répartiteur de gaz selon la revendication 3, **caractérisée en ce que** des nervures limites de méandre (8, 8') avec une largeur montant en forme de coin sont prévues.

5. Plaque de champ répartiteur de gaz selon la revendication 3 ou 4, **caractérisée en ce que** dans les zones de déviation (5, 5') des canaux limites de méandre (3, 3') sont prévus des éléments de nervure (9, 9', 9") supplémentaires et l'agencement canal-nervure restant présente une géométrie à angle droit.

6. Plaque de champ répartiteur de gaz selon au moins l'une des revendications précédentes, **caractérisée en ce que** des nervures limites de méandre (4, 4', 8, 8') de différentes modifications sont combinées.

7. Cellule de combustible comprenant une plaque de champ répartiteur de gaz selon au moins l'une des revendications 1-6 sur le côté cathode et/ou le côté anode.

8. Cellule de combustible selon la revendication 7, pour laquelle il s'agit d'une cellule de combustible à membrane électrolytique polymère (PEM).
